# EUROPEAN PATENT SPECIFICATION

(11) **EP 4 542 182 B1**
(45) Date of publication and mention of the grant of the patent: **24.06.2026**
(21) Application number: 23850273.6
(22) Date of filing: 10.07.2023
(51) Int. Cl.: G01F 23/292, G01F 23/296, G01F 23/80, G01N 15/02, G06N 20/00, G01F 13/00, G01F 22/00, G01N 15/0227, G01N 15/075, G01N 15/00

(54) **MEASUREMENT METHOD AND MEASUREMENT DEVICE FOR REMAINING QUANTITY OF LIQUID IN LIQUID STORAGE CONTAINER**
MESSVERFAHREN UND MESSVORRICHTUNG FÜR RESTFLÜSSIGKEITSMENGE IN EINEM FLÜSSIGKEITSAUFBEWAHRUNGSBEHÄLTER
PROCÉDÉ DE MESURE ET DISPOSITIF DE MESURE POUR LA QUANTITÉ RESTANTE DE LIQUIDE DANS UN RÉCIPIENT DE STOCKAGE DE LIQUIDE

(30) Priority: 01.08.2022 KR 20220095708
(43) Date of publication of application: 23.04.2025
(73) Proprietor: LG Energy Solution, Ltd., Seoul 07335 (KR)
(72) Inventor: LEE, Jae Chan, Daejeon 34122 (KR)
(74) Representative: Plasseraud IP
(86) International application number: PCT/KR2023/009764
(87) International publication number: WO 2024/029764

(56) References cited:
- EP-A1- 4 033 254
- WO-A1-2021/053856
- CN-A- 103 185 622
- JP-A- 2002 519 704
- JP-A- 2004 333 314
- JP-A- 2011 038 975
- KR-A- 20130 040 948
- US-A1- 2013 068 327
- US-A1- 2021 231 484

## Description

### TECHNICAL FIELD

The present application claims the benefit of the priority of Korean Patent Application No. 10-2022-0095708, filed on August 1, 2022.

The present invention relates to a method and apparatus for measuring a remaining amount of liquid in a liquid storage container, and more particularly, to a method and apparatus for measuring a remaining amount of liquid in a liquid storage container, which are capable of more accurately and quickly estimating and identifying the remaining amount of liquid in the liquid storage container that is difficult to visually check the inside thereof.

### BACKGROUND ART

Secondary batteries, which are widely used in various digital devices and transport means such as vehicles are repeatedly chargeable and dischargeable. Also, research and development are continuously performed to increase efficiency and improve safety.

A secondary battery is manufactured in structure in which an electrode assembly, in which a positive electrode/separator/negative electrode are repeatedly stacked, is accommodated in a case such as a can or pouch, and then, an electrolyte is injected into the case.

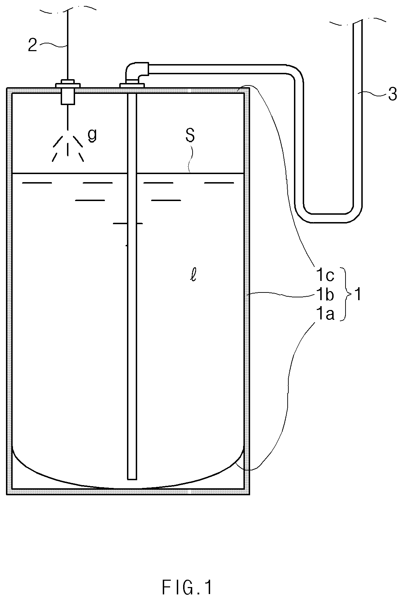

The electrolyte is injected into a liquid storage container such as a drum and then is stored and moves. In addition, as illustrated in FIG. 1, which illustrates a cross-sectional view of an electrolyte being discharged from a liquid storage container, the liquid storage container 1 is provided in a cylindrical shape having a bottom surface 1a, a circumferential wall 1b, and a top surface 1c, and in a state of standing vertically, when a suction tube 3 enters through a hole defined in the top surface 1c, and a negative pressure is applied to the suction tube 3, an electrolyte 1 is discharged to the outside of the liquid storage container 1.

However, in order to maintain physical and chemical stability of the electrolyte 1, the liquid storage container 1 in which the electrolyte is stored is made of stainless steel. Thus, there is a problem that it is difficult to visually check a remaining amount of electrolyte inside the liquid storage container, i.e., a height of a water surface s, from the outside.

In the related art, an internal pressure of the liquid storage container 1 increases to inject an inert gas g into the liquid storage container 1 through a gas injection tube 2 during discharging of the electrolyte or when the discharge of the electrolyte is almost finished so as to minimize a remaining amount of electrolyte.

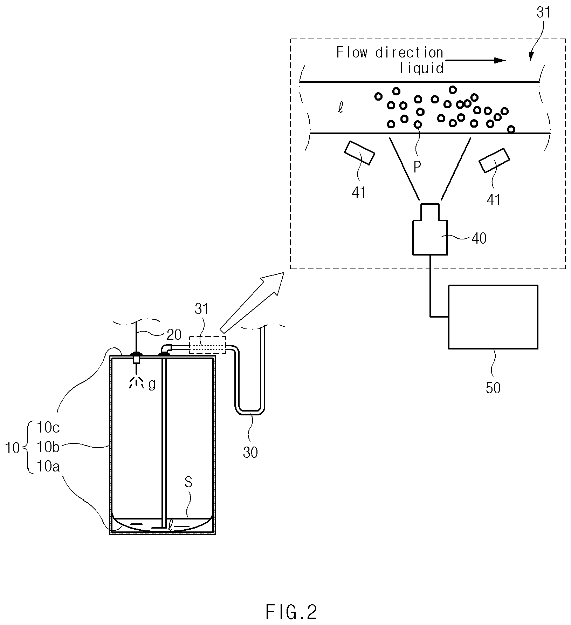

However, an injection of a gas g may start when the water surface s of the electrolyte 1 falls below a certain reference, and when the water surface s of the electrolyte falls below the suction tube 3, it is preferable that the injection of the gas g is stopped, but when a time point at which the injection of the gas g starts is too early, and a time point at which the injection g of the gas is stopped is too late, there is a problem that bubbles P (see FIG. 2) are introduced together into the suction tube 3.

In addition, when the electrolyte is injected into the case of the secondary battery (such as measuring an amount of electrolyte injection), the bubbles cause defects of the secondary battery. That is, when a small amount of electrolyte remains, the gas g is injected to ensure smooth discharge of the electrolyte into the liquid storage container, but when the gas g is introduced into the suction tube 3, a motor or pump and the suction tube, which generates the negative pressure in the suction tube 3, are connected to the suction tube to cause idling of the motor or pump, which injects the electrolyte into the case of the secondary battery, thereby causing malfunction, and when the gas g introduced together with the electrolyte is introduced together with the case of the secondary battery, a swelling phenomenon occurs in the secondary battery in the future.

Thus, in order to prevent the inflow of the bubbles P and waste of the electrolyte, a technical need is required for measuring the remaining amount in the liquid storage container 1 in which the electrolyte is stored.

Document EP 4 033 254 discloses an apparatus and method for determining remaining amount of liquid in a container based on optical detection of bubbles in a suction tube.

### DISCLOSURE OF THE INVENTION

### TECHNICAL PROBLEM

A main object of the present invention is to provide a method and apparatus for measuring a remaining amount of liquid within a liquid storage container, which are capable of quickly and accurately estimating or measuring the remaining amount of electrolyte within the liquid storage container to satisfy the above technical needs. For reference, the 'measurement' described here is used not only to measure the remaining amount of electrolyte (liquid), but also to predict and estimate how much electrolyte remains in the liquid storage container or whether the remaining amount has fallen below a predetermined standard value.

### TECHNICAL SOLUTION

The present invention for achieving the above-mentioned object includes a method and apparatus for measuring a remaining amount of liquid in a liquid storage container as defined in the appended claims. In addition, the present invention provides a configuration for estimating (predicting or measuring) the remaining amount by monitoring bubbles contained in the discharged liquid (electrolyte) and provides an additional configuration capable of being accomplished together with or separately from the above configuration, i.e., a configuration that oscillates ultrasonic waves inside the liquid storage container to estimate (predict or measure) the remaining amount based on the waveform of the ultrasonic carrier wave.

Among them, in the measuring method and measuring apparatus that monitor the bubbles contained in the discharged electrolyte to estimate the remaining amount, a light transmitting part is provided in the suction tube to observe characteristics of the bubbles through the light transmitting part and estimate the remaining amount of electrolyte based on the observed characteristics, and in the present invention, the measuring method and measuring apparatus having these technical features are provided as examples.

### ADVANTAGEOUS EFFECTS

The present invention having the above configuration may determine the remaining amount of liquid (electrolyte) in the liquid storage container in real time, and thus, the input and stop time points and an input amount of gas injected into the liquid storage container may be more accurately determined to solve the conventional problem in which the motor and the pump malfunction, and the bubbles are introduced together into the case of the secondary battery.

According to the present invention, the remaining amount may be estimated by observing the size and number of bubbles passing through the suction tube so as not to affect the flow speed of the electrolyte and not to cause the physical and/or chemical changes or impacts to the electrolyte. In addition, since there is no need for separate measuring equipment to be introduced into the liquid storage container, the inflow of the foreign substances may be blocked fundamentally.

When observing the bubbles at the light transmitting part, the additional light may be irradiated from the lighting to observe the size and number of bubbles through the more accurate image data.

In the present invention, the controller may more quickly estimate the remaining amount of liquid by comparing the size and number of observed bubbles to the previously provided reference data.

Alternatively, the controller may estimate the remaining amount of liquid using the machine learning method that learns by comparing and analyzing the correlation between the size and number of observed bubbles and the actual remaining amount of liquid and estimates the remaining amount of liquid based on the learned data, and thus, even when the physical properties are changed, or the size of the liquid storage container is changed, the remaining amount of liquid may be estimated in consideration of the variables.

Furthermore, in the present invention, the remaining amount of electrolyte may be estimated using the ultrasonic carrier wave. Therefore, the remaining amount of electrolyte may be more accurately measured by performing the method for estimating the remaining amount by observing the bubbles.

### BRIEF DESCRIPTION OF THE DRAWINGS

FIG. 1 is a cross-sectional view illustrating a state in which an electrolyte is discharged from a liquid storage container.
FIG. 2 is a view illustrating a state in which a vision device and a lighting are disposed to observe a size and number of bubbles through a light transmitting part of a suction tube, and the vision device is connected to a controller.
FIG. 3 is a view illustrating a state in which an ultrasonic generator is attached to an outer bottom surface of a liquid storage container and is connected to a controller.
FIG. 4 is a view illustrating a state in which the ultrasonic generator is attached to an outer circumferential wall of the liquid storage container and is connected to the controller.
FIG. 5 is a view illustrating a state in which a vision device and a lighting are disposed to observe a size and number of bubbles through a light transmitting part of a suction tube, the ultrasonic generator is attached to an outer circumferential surface of the liquid storage container, and each of the vision device and the ultrasonic generator is connected to the same one controller.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a method and apparatus for measuring a remaining amount of electrolyte 1 in a liquid storage container 10.

The present invention provides a configuration for estimating a remaining amount by monitoring bubbles P contained in a discharged liquid electrolyte as a first embodiment and provides an additional configuration that is performed together with the first embodiment or performed separately from the first embodiment, i.e., a configuration that oscillates ultrasonic waves into a liquid storage container and estimates the remaining amount based on the waveform of the ultrasonic carrier wave as a second embodiment. Hereinafter, embodiments will be described in more detail with reference to the accompanying drawings.

### First embodiment

The present invention provides a method and apparatus for estimating a remaining amount by monitoring bubbles P contained in a discharged electrolyte 1 as a first embodiment.

FIG. 2 is a view illustrating a state in which a vision device 40 and a lighting 41 are disposed to observe a size and number of bubbles P through a light transmitting part 31 of a suction tube 30, and the vision device 40 is connected to a controller 50.

Referring to FIG. 2, an apparatus for measuring a remaining amount of a liquid in a liquid storage container provided in this embodiment includes a liquid storage container 10 in which a liquid is stored, a suction tube 30, a vision device 40, and a controller 50.

The liquid storage container 10 has a cylindrical shape with a bottom surface 10a, a circumferential wall 10b standing vertically along a circumference of the bottom surface 10a, and a top surface 10c covering an opened upper side of the circumferential wall 10b. In addition, at least two holes are punched in the top surface 10c, and a gas injection tube 20 through which a gas g is injected into the liquid storage container and a suction tube 30 through which an electrolyte is suctioned from the liquid storage container 10 and then is discharged to the outside are coupled to the holes, respectively.

The gas injection tube 20 does not protrude into the liquid storage container 10 or protrudes only by a small length, but the suction tube 30 has an end disposed close to the bottom surface 10a to maximize suction of the electrolyte stored in the liquid storage container 10.

The bottom surface 10a may be provided as a spherical surface, and the end of the suction tube 30 may be disposed as low as possible at a slight distance from a center of the spherical surface.

As described above, one side of the suction tube 30 is placed on the bottom surface 10a inside the liquid storage container 10, and the other side of the suction tube 30 is connected to a separate storage facility or an injection device for injecting the electrolyte to suction the electrolyte 1 stored in the liquid storage container 10 and then allow the electrolyte 1 to move to the storage facility or the injection device.

The suction tube 30 is provided with a light transmitting part 31 made of a transparent or translucent material (preferably made of a transparent material) at a portion that is spaced apart from the liquid storage container 10 so as to be exposed to the outside.

The light transmitting part 31 may be disposed in a predetermined section of the suction tube 30, but may be disposed not only at one position but at two or more positions spaced apart from each other. In addition, the position is not particularly limited, but is disposed in a section extending in a straight line from the outside the liquid storage container 10 so that more accurate optical information is obtained when the vision device 40 optically senses the bubbles P.

The vision device 40 may use a camera, an optical sensor, and the like, which are capable of obtaining an optical image or an image having the number and/or size of bubbles P contained in the electrolyte to move together while the electrolyte moves.

The vision device 40 transmits the acquired image information to the controller 50. In addition, the lighting 41 that emits light toward the light transmitting part 31 may be added according to lighting conditions around the light transmitting part 31.

The image information about the size and number of bubbles P transmitted from the vision device 40 is transmitted to the controller 50, and then, the controller 50 analyzes the received image information to estimate a remaining amount of electrolyte inside the liquid storage container 10 or a height of a water surface S of the electrolyte. That is, when the water surface S of the electrolyte 1 falls below the end of the suction tube 30, air and gas g together with the electrolyte are suctioned into the suction tube 30. Here, the air and gas g pass through the light transmitting part 31 in the form of bubbles P while the electrolyte flows. Thus, the height of the water surface S of the electrolyte may be estimated through the size and number of bubbles P, and thus, the remaining amount may also be estimated.

Therefore, the measuring apparatus has a configuration, in which a portion of the suction tube 30 is transparent to provide the light transmitting part 31, and the state of the bubbles P is determined through the light transmitting part 31 to estimate the remaining amount. For reference, when the size of each of the bubbles P is small, sensing performance may be improved by additionally irradiating the light 41 or increasing in resolution of the captured image.

The controller 50 may be configured to output the information on the size and number of bubbles, which is received from the vision device 40, and the estimation results on a display device (not shown) so that a worker and manager determine the remaining amount and the measurement states.

Furthermore, the controller 50 may be configured to compare the size and number of observed bubbles to previously provided reference data so as to estimate the remaining amount of liquid (electrolyte). Alternatively, the controller may be configured to estimate the remaining amount of liquid in a machine learning manner in which the correlation between the size and number of observed bubbles and an actual remaining amount of liquid is compared and analyzed to be learned, and then, the remaining amount is estimated based on the learned data.

This embodiment provides a measuring method using the measuring apparatus having the above configuration.

A method for measuring the remaining amount of liquid in the liquid storage container 10 provided in this embodiment begins with a process of discharging an electrolyte stored in a liquid storage container to the outside through a suction tube 30.

As described above, a light transmitting part 31 is provided on the suction tube 30 so that a vision device 40 performs a process of observing (sensing) a size of bubble P or the number of bubbles P, which are contained in the electrolyte passing through the light transmitting part 31.

Then, a process of estimating the remaining amount of liquid based on the size and number of observed bubbles through a controller 50 receiving image data from the vision device 40 is performed.

Furthermore, a process of injecting a gas g into the liquid storage container after discharging the liquid within a predetermined range according to the remaining amount, i.e., the number of bubbles may be additionally performed. Here, as described above, the liquid is an electrolyte for a secondary battery, and the gas injected into the liquid storage container is nitrogen, which does not chemically react with the electrolyte.

In addition, when the estimated remaining amount of liquid is estimated to be lower than a predetermined remaining amount, a process of stopping the gas injection into the liquid storage container is performed.

### Second embodiment

Furthermore, the present invention provides a measuring method and apparatus in which ultrasonic waves are oscillated to estimate a remaining amount based on a waveform of an ultrasonic carrier wave as a second embodiment. The method using the ultrasonic carrier wave according to the second embodiment may be performed simultaneously with the measuring method according to the first embodiment or performed separately before and after the measuring method according to the first embodiment or performed instead of the measuring method according to the first embodiment.

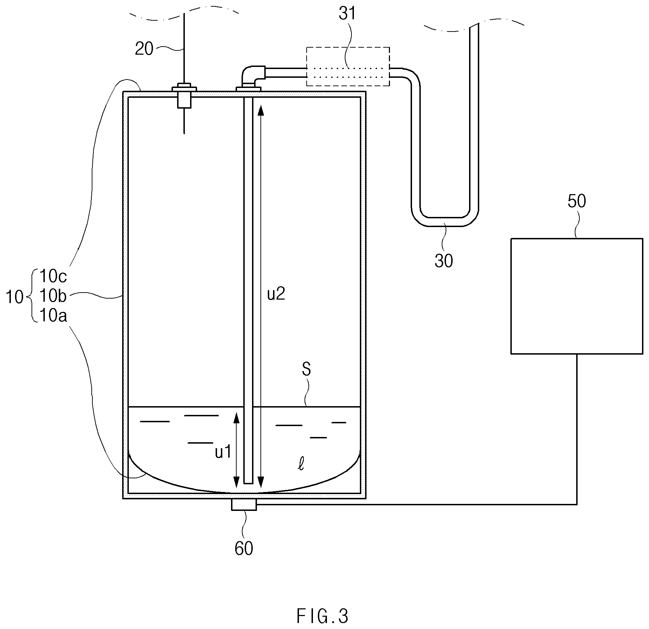

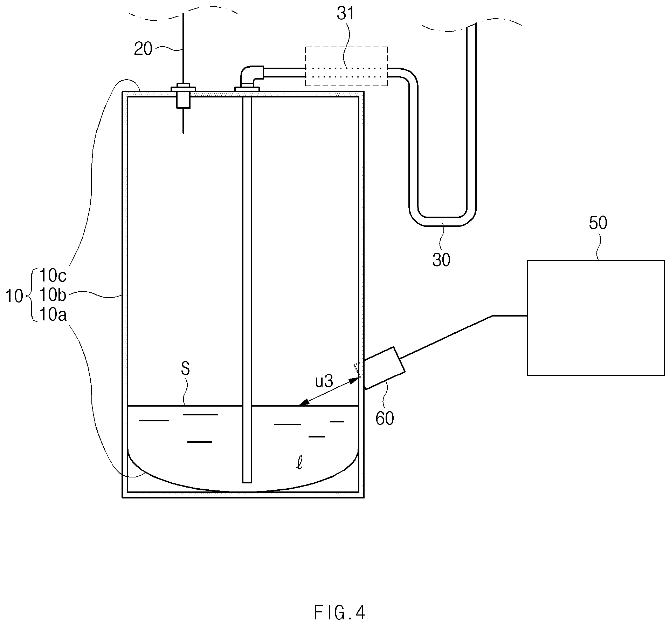

FIG. 3 is a view illustrating a state in which an ultrasonic generator 60 is attached to an outer bottom surface of the liquid storage container and is connected to the controller, and FIG. 4 is a view illustrating a state in which the ultrasonic generator 60 is attached to an outer circumferential wall 10b of the liquid storage container and is connected to the controller.

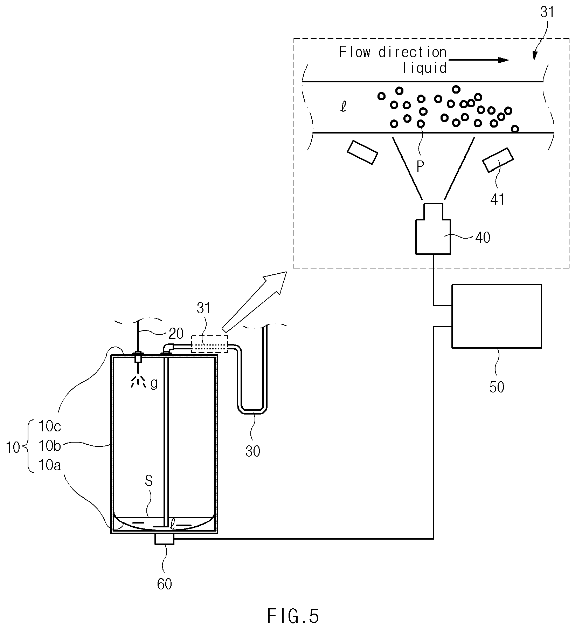

In addition, FIG. 5 is a view illustrating a state in which a vision device 40 and a lighting 41 are disposed to observe the size and number of bubbles through a light transmitting part 31 of a suction tube 30, the ultrasonic generator 60 is attached to the bottom surface 10a of the liquid storage container 10, and each of the vision device and the ultrasonic generator is connected to the same one controller 50.

Referring to the drawings, the apparatus for measuring a remaining amount of liquid within the liquid storage container 10 provided in this embodiment includes the ultrasonic generator 60 attached to an outer surface (bottom surface or circumferential wall) of the liquid storage container in which a liquid is stored to oscillate ultrasonic waves toward the inside of the liquid storage container, an ultrasonic receiver (not shown) that receives the ultrasonic waves returned after being generated from the ultrasonic generator 60, and the controller 50 that estimates the remaining amount of liquid by comparing waveform information of the ultrasonic waves received from the ultrasonic receiver to previously provided reference data. Here, the controller 50 may be the controller 50 provided in the first embodiment or may be provided separately.

That is, in the ultrasonic waves oscillated toward the inside of the liquid storage container 10, 'carrier wave u1 reflected from a water surface S of an electrolyte l' and 'carrier wave u2 reflected from an inner wall (top surface, circumferential, etc.) of the liquid storage container 10 after passing through the water surface S of the electrolyte l' have amplitudes, phases, frequencies, periods, etc., which are different from each other, to vary in waveform. That is, the ultrasonic waves react differently when passing through a liquid medium and when passing through a gaseous (air) medium, resulting in varying in waveform. Thus, a height of the water surface s of the electrolyte may be determined through a difference in waveform of the carrier waves u1 and u2 or a change in characteristic of a carrier wave u3 according to mounted positions of the ultrasonic generator 60.

The ultrasonic receiver may be integrated with the ultrasonic generator 60, and the ultrasonic generator 60 may oscillate ultrasonic waves and receive the returned ultrasonic waves to transmit waveform information of the received ultrasonic waves to the controller 50.

The ultrasonic generator 60 may be attached to a center from the outside of the bottom surface 10a of the liquid storage container 10 as illustrated in FIGS. 3 and 5 or may be attached to the circumferential wall 10b of the liquid storage container 10a as illustrated in FIG. 4.

Furthermore, this embodiment provides a measurement method using the measuring apparatus having the above configuration.

A method for measuring a remaining amount of liquid within a liquid storage container using ultrasonic waves includes a process of closely attaching an ultrasonic generator 60 generating ultrasonic waves to an outer surface of a liquid storage container, a process of oscillating the ultrasonic waves from the ultrasonic generator 60 to the inside of the liquid storage container 10, a process of receiving the ultrasonic waves returned after the oscillation to analyze the waveform of the ultrasonic waves, and a process of comparing the waveform of the ultrasonic waves to previously provided reference data to estimate the remaining amount of liquid.

Here, the ultrasonic receiver may be integrated into the ultrasonic generator, and two or more ultrasonic receivers may be attached to the liquid storage container to further improve estimation accuracy by individually analyzing the waveform of the ultrasonic waves at different points. For example, the ultrasonic generator with which the ultrasonic receiver is integrated may be in close contact with a center at the outside of a bottom surface 10a of the liquid storage container and may also be in close contact with a circumferential wall 10b of the liquid storage container.

The process of estimating the remaining amount using carrier waves of the ultrasonic waves may be performed before a process of discharging the liquid in the liquid storage container to the outside through the suction tube 30 or after a process of estimating the remaining amount of liquid through a size and number of observed bubbles.

That is, the apparatus for measuring the remaining amount using the ultrasonic waves provided in the second embodiment may be installed together with the apparatus for measuring the remaining amount provided in the first embodiment, as illustrated in FIG. 5. In addition, the method of measuring the remaining amount using the ultrasonic waves provided in the second embodiment may be performed simultaneously with the method of measuring the remaining amount provided in the first embodiment or may be performed sequentially with a time difference.

In this case, the controller 50 may be configured to be connected to a vision device 40, an ultrasonic generator 60, and an ultrasonic receiver to receive all of ultrasonic waveform information and bubble information, thereby finally estimating the remaining amount by synthesizing the two pieces of information.

In addition, in some cases, only one of the method for measuring the remaining amount provided in the first embodiment and the method for measuring the remaining amount provided in the second embodiment may be implemented.

The present invention having the above configuration may determine the remaining amount of liquid (electrolyte) in the liquid storage container in real time, and thus, the input and stop time points and an input amount of gas injected into the liquid storage container may be more accurately determined to solve the conventional problem in which the motor and the pump are malfunctioned, and the bubbles are introduced together into the case of the secondary battery.

According to the present invention, the remaining amount may be estimated by observing the size and number of bubbles passing through the suction tube so as not to affect the flow speed of the electrolyte and not to cause the physical and/or chemical changes or impacts to the electrolyte. In addition, since there is no need for separate measuring equipment to be introduced into the liquid storage container, the inflow of the foreign substances may be blocked fundamentally.

When observing the bubbles at the light transmitting part, the additional light may be irradiated from the lighting to observe the size and number of bubbles through the more accurate image data.

In the present invention, the controller may more quickly estimate the remaining amount of liquid by comparing the size and number of observed bubbles to the previously provided reference data.

Alternatively, the controller may estimate the remaining amount of liquid using the machine learning method that learns by comparing and analyzing the correlation between the size and number of observed bubbles and the actual remaining amount of liquid and estimates the remaining amount of liquid based on the learned data, and thus, even when the physical properties are changed, or the size of the liquid storage container is changed, the remaining amount of liquid may be estimated in consideration of the variables.

Furthermore, in the present invention, the remaining amount of electrolyte may be estimated using the ultrasonic carrier wave. Therefore, the remaining amount of electrolyte may be more accurately measured by performing the method for estimating the remaining amount by observing the bubbles.

While the embodiments of the present invention have been described with reference to the specific embodiments, it will be apparent to those skilled in the art that various changes and modifications may be made without departing from the scope of the invention as defined in the following claims.

### [Description of the Symbols]

- 10:: Liquid storage container
- 20:: Gas injection tube
- 30:: Suction tube
- 31:: Light transmitting part
- 40:: Vision device
- 41:: Lighting
- 50:: Controller
- 60:: Ultrasonic generator

## Claims

1. A method for measuring a remaining amount of a liquid within a liquid storage container (10), comprising:
discharging the liquid within the liquid storage container (10) to outside through a suction tube (30) inserted into the liquid storage container (10);
observing a size or a number of bubbles contained in the liquid passing through a light transmitting part (31), made of a transparent or translucent material, through a vision device (40) that emits light toward the light transmitting part (31) of the suction tube (30); and
estimating the remaining amount of the liquid based on the size and the number of the bubbles observed;
wherein a controller (50) configured to estimate the remaining amount of liquid based on information received from the vision device (40) estimates the remaining amount of liquid in a machine learning manner in which a correlation between the size and number of observed bubbles and an actual amount of liquid remaining is learned to estimate the remaining amount based on the learned data.

2. The method of claim 1, further comprising injecting a gas into the liquid storage container (10) after discharging the liquid within a predetermined range.

3. The method of claim 2, wherein the liquid is an electrolyte for a secondary battery, and
the gas injected into the liquid storage container is nitrogen.

4. The method of claim 2, further comprising, when it is estimated that the estimated remaining amount of liquid is less than a predetermined remaining amount, stopping the injection of the gas into the liquid storage container (10).

5. The method of claim 1, wherein, in the observing of the size of the bubble or the number of bubbles, light is emitted from a lighting (41) toward the light transmitting part (31).

6. The method of claim 1, wherein the controller (50) configured to estimate the remaining amount of liquid based on information received from the vision device (40) compares the size and number of observed bubbles to previously provided reference data to estimate the remaining amount of liquid.

7. The method of any one of claims 1 to 6, further comprising estimating the remaining amount using an ultrasonic carrier wave,
wherein the estimating of the remaining amount using the ultrasonic carrier wave comprises:
oscillating ultrasonic waves from an ultrasonic generator (60) to the inside of the liquid storage container (10);
receiving the ultrasonic waves returned after the oscillation to analyze a waveform of the ultrasonic waves; and
comparing the waveform of the ultrasonic waves to previously provided reference data to estimate the remaining amount of liquid.

8. The method of claim 7, wherein the ultrasonic generator (60) is in close contact with a center of an outer surface of the bottom (10a) of the liquid storage container (10) or is in close contact with a circumferential wall (10b) of the liquid storage container (10).

9. The method of claim 7, wherein the estimating of the remaining amount using the ultrasonic carrier wave is performed before the discharging of the liquid within the liquid storage container (10) to the outside through the suction tube (30).

10. The method of claim 7, wherein the estimating of the remaining amount using the ultrasonic carrier wave is performed after the estimating of the remaining amount of liquid through the size and number of observed bubbles.

11. An apparatus for measuring a remaining amount of liquid within a liquid storage container, the apparatus comprising:
a liquid storage container (10) in which a liquid is stored;
a suction tube (30) which is connected to the liquid storage container (10), through which the liquid is suctioned and discharged, and which is provided with a light transmitting part (31) made of a transparent or translucent material;
a vision device (40) directed to the light transmitting part (31); and
a controller (50) configured to receive information about a size and number of bubbles from the vision device (40) so as to estimate the remaining amount of liquid;
wherein the controller (50) is configured to estimate the remaining amount of liquid in a machine learning manner in which a correlation between the size and number of observed bubbles and an actual amount of liquid remaining is learned to estimate the remaining amount based on the learned data.

12. The apparatus of claim 11, wherein the controller (50) is configured to output the information on the size and number of bubbles, which is received from the vision device (40), and the estimation results on a display device.

13. The apparatus of claim 12, further comprising a lighting (41) configured to emit light toward the light transmitting part (31).

14. The apparatus of claim 12, wherein the light transmitting part (31) is disposed in a predetermined section in the suction tube (30) and is disposed in a section extending in a straight line from the outside the liquid storage container (10).

## Patentansprüche

1. Ein Verfahren zum Messen einer Restflüssigkeitsmenge in einem Flüssigkeitsaufbewahrungsbehälter (10), umfassend:
das Ablassen der Flüssigkeit innerhalb des Flüssigkeitsaufbewahrungsbehälters (10) nach außen durch ein Saugrohr (30), das in den Flüssigkeitsaufbewahrungsbehälter (10) eingeführt ist;
das Beobachten einer Größe oder einer Anzahl von Blasen, die in der Flüssigkeit enthalten sind, die durch einen lichtdurchlässigen Teil (31) aus einem transparenten oder durchscheinenden Material strömt, durch eine Sichtvorrichtung (40), die Licht in Richtung des lichtdurchlässigen Teils (31) des Saugrohrs (30) emittiert; und
das Schätzen der Restmenge der Flüssigkeit basierend auf der Größe und der Anzahl der beobachteten Blasen;
wobei eine Steuerung (50), die konfiguriert ist, um die Restmenge an Flüssigkeit basierend auf von der Sichtvorrichtung (40) empfangenen Informationen zu schätzen, die Restmenge an Flüssigkeit in einer Weise des maschinellen Lernens schätzt, bei der eine Korrelation zwischen der Größe und der Anzahl der beobachteten Blasen und einer tatsächlichen verbleibenden Flüssigkeitsmenge gelernt wird, um die Restmenge basierend auf den gelernten Daten zu schätzen.

2. Verfahren nach Anspruch 1, ferner umfassend das Einleiten eines Gases in den Flüssigkeitsaufbewahrungsbehälter (10) nach dem Ablassen der Flüssigkeit innerhalb eines vorbestimmten Bereichs.

3. Verfahren nach Anspruch 2, wobei die Flüssigkeit ein Elektrolyt für eine Sekundärbatterie ist, und
das in den Flüssigkeitsaufbewahrungsbehälter eingeleitete Gas Stickstoff ist.

4. Verfahren nach Anspruch 2, ferner umfassend, wenn geschätzt wird, dass die geschätzte Restmenge an Flüssigkeit geringer ist als eine vorbestimmte Restmenge, das Stoppen der Einleitung des Gases in den Flüssigkeitsaufbewahrungsbehälter (10).

5. Verfahren nach Anspruch 1, wobei beim Beobachten der Größe der Blase oder der Anzahl der Blasen Licht von einer Beleuchtung (41) in Richtung des lichtdurchlässigen Teils (31) emittiert wird.

6. Verfahren nach Anspruch 1, wobei die Steuerung (50), die konfiguriert ist, um die Restmenge an Flüssigkeit basierend auf von der Sichtvorrichtung (40) empfangenen Informationen zu schätzen, die Größe und die Anzahl der beobachteten Blasen mit zuvor bereitgestellten Referenzdaten vergleicht, um die Restmenge an Flüssigkeit zu schätzen.

7. Verfahren nach einem der Ansprüche 1 bis 6, ferner umfassend das Schätzen der Restmenge unter Verwendung einer Ultraschallträgerwelle,
wobei das Schätzen der Restmenge unter Verwendung der Ultraschallträgerwelle umfasst:
das Oszillieren von Ultraschallwellen von einem Ultraschallgenerator (60) in das Innere des Flüssigkeitsaufbewahrungsbehälters (10);
das Empfangen der nach der Oszillation zurückgesendeten Ultraschallwellen, um eine Wellenform der Ultraschallwellen zu analysieren; und
das Vergleichen der Wellenform der Ultraschallwellen mit zuvor bereitgestellten Referenzdaten, um die Restmenge an Flüssigkeit zu schätzen.

8. Verfahren nach Anspruch 7, wobei der Ultraschallgenerator (60) in engem Kontakt mit einem Zentrum einer Außenfläche des Bodens (10a) des Flüssigkeitsaufbewahrungsbehälters (10) steht oder in engem Kontakt mit einer Umfangswand (10b) des Flüssigkeitsaufbewahrungsbehälters (10) steht.

9. Verfahren nach Anspruch 7, wobei das Schätzen der Restmenge unter Verwendung der Ultraschallträgerwelle vor dem Ablassen der Flüssigkeit innerhalb des Flüssigkeitsaufbewahrungsbehälters (10) nach außen durch das Saugrohr (30) durchgeführt wird.

10. Verfahren nach Anspruch 7, wobei das Schätzen der Restmenge unter Verwendung der Ultraschallträgerwelle nach dem Schätzen der Restmenge an Flüssigkeit durch die Größe und die Anzahl der beobachteten Blasen durchgeführt wird.

11. Eine Vorrichtung zum Messen einer Restmenge an Flüssigkeit in einem Flüssigkeitsaufbewahrungsbehälter, wobei die Vorrichtung umfasst:
einen Flüssigkeitsaufbewahrungsbehälter (10), in dem eine Flüssigkeit aufbewahrt wird;
ein Saugrohr (30), das mit dem Flüssigkeitsaufbewahrungsbehälter (10) verbunden ist, durch das die Flüssigkeit angesaugt und abgelassen wird, und das mit einem lichtdurchlässigen Teil (31) aus einem transparenten oder durchscheinenden Material versehen ist;
eine Sichtvorrichtung (40), die auf den lichtdurchlässigen Teil (31) gerichtet ist; und
eine Steuerung (50), die konfiguriert ist, um Informationen über eine Größe und Anzahl von Blasen von der Sichtvorrichtung (40) zu empfangen, um die Restmenge an Flüssigkeit zu schätzen;
wobei die Steuerung (50) konfiguriert ist, um die Restmenge an Flüssigkeit in einer Weise des maschinellen Lernens zu schätzen, bei der eine Korrelation zwischen der Größe und der Anzahl der beobachteten Blasen und einer tatsächlichen verbleibenden Flüssigkeitsmenge gelernt wird, um die Restmenge basierend auf den gelernten Daten zu schätzen.

12. Vorrichtung nach Anspruch 11, wobei die Steuerung (50) konfiguriert ist, um die Informationen über die Größe und die Anzahl der Blasen, die von der Sichtvorrichtung (40) empfangen werden, und die Schätzungsergebnisse auf einer Anzeigevorrichtung auszugeben.

13. Vorrichtung nach Anspruch 12, ferner umfassend eine Beleuchtung (41), die konfiguriert ist, um Licht in Richtung des lichtdurchlässigen Teils (31) zu emittieren.

14. Vorrichtung nach Anspruch 12, wobei der lichtdurchlässige Teil (31) in einem vorbestimmten Abschnitt im Saugrohr (30) angeordnet ist und in einem Abschnitt angeordnet ist, der sich in einer geraden Linie von der Außenseite des Flüssigkeitsaufbewahrungsbehälters (10) erstreckt.

## Revendications

1. Procédé de mesure d'une quantité restante d'un liquide à l'interieur d'un recipient de stockage de liquide (10), comprenant :
la decharge du liquide a l'interieur du recipient de stockage de liquide (10) vers l'exterieur par l'intermediaire d'un tube d'aspiration (30) inséré dans le recipient de stockage de liquide (10) ;
l'observation d'une taille ou d'un nombre de bulles contenues dans le liquide passant à travers une partie de transmission de lumière (31), faite d'un matériau transparent ou translucide, par l'intermédiaire d'un dispositif de vision (40) qui émet de la lumière vers la partie de transmission de lumière (31) du tube d'aspiration (30) ; et
l'estimation de la quantité restante du liquide sur la base de la taille et du nombre des bulles observées ;
dans lequel un contröleur (50) configuré pour estimer la quantité restante de liquide sur la base des informations reçues du dispositif de vision (40) estime la quantité restante de liquide d'une manière par apprentissage automatique dans laquelle une corrélation entre la taille et le nombre de bulles observées et une quantité réelle de liquide restant est apprise pour estimer la quantité restante sur la base des données apprises.

2. Procédé selon la revendication 1, comprenant en outre l'injection d'un gaz dans le récipient de stockage de liquide (10) après la décharge du liquide dans une plage prédéterminée.

3. Procédé selon la revendication 2, dans lequel le liquide est un électrolyte pour une batterie secondaire, et
le gaz injecté dans le récipient de stockage de liquide est de l'azote.

4. Procédé selon la revendication 2, comprenant en outre, lorsqu'il est estimé que la quantité restante estimée de liquide est inférieure à une quantité restante prédéterminée, l'arrêt de l'injection du gaz dans le récipient de stockage de liquide (10).

5. Procédé selon la revendication 1, dans lequel, lors de l'observation de la taille de la bulle ou du nombre de bulles, de la lumière est émise depuis un éclairage (41) vers la partie de transmission de lumière (31).

6. Procédé selon la revendication 1, dans lequel le contröleur (50) configuré pour estimer la quantité restante de liquide sur la base des informations reçues du dispositif de vision (40) compare la taille et le nombre de bulles observées à des données de référence fournies précédemment pour estimer la quantité restante de liquide.

7. Procédé selon l'une quelconque des revendications 1 à 6, comprenant en outre l'estimation de la quantité restante à l'aide d'une onde porteuse ultrasonore,
dans lequel l'estimation de la quantité restante à l'aide de l'onde porteuse ultrasonore comprend :
le fait de faire osciller des ondes ultrasonores depuis un générateur d'ultrasons (60) vers l'interieur du recipient de stockage de liquide (10) ;
la réception des ondes ultrasonores renvoyées après l'oscillation pour analyser une forme d'onde des ondes ultrasonores ; et
la comparaison de la forme d'onde des ondes ultrasonores à des données de référence fournies précédemment pour estimer la quantité restante de liquide.

8. Procédé selon la revendication 7, dans lequel le générateur d'ultrasons (60) est en contact étroit avec un centre d'une surface extérieure du fond (10a) du récipient de stockage de liquide (10) ou est en contact étroit avec une paroi circonférentielle (10b) du récipient de stockage de liquide (10).

9. Procédé selon la revendication 7, dans lequel l'estimation de la quantité restante à l'aide de l'onde porteuse ultrasonore est effectuée avant la décharge du liquide à l'intérieur du récipient de stockage de liquide (10) vers l'extérieur par l'intermédiaire du tube d'aspiration (30).

10. Procédé selon la revendication 7, dans lequel l'estimation de la quantité restante à l'aide de l'onde porteuse ultrasonore est effectuée après l'estimation de la quantité restante de liquide par l'intermédiaire de la taille et du nombre de bulles observées.

11. Appareil de mesure d'une quantité restante de liquide à l'intérieur d'un récipient de stockage de liquide, l'appareil comprenant :
un récipient de stockage de liquide (10) dans lequel un liquide est stocké ;
un tube d'aspiration (30) qui est connecté au récipient de stockage de liquide (10), à travers lequel le liquide est aspiré et déchargé, et qui est pourvu d'une partie de transmission de lumière (31) faite d'un matériau transparent ou translucide ;
un dispositif de vision (40) dirigé vers la partie de transmission de lumière (31) ; et
un contröleur (50) configuré pour recevoir des informations concernant une taille et un nombre de bulles depuis le dispositif de vision (40) de manière à estimer la quantité restante de liquide ;
dans lequel le contröleur (50) est configuré pour estimer la quantité restante de liquide d'une manière par apprentissage automatique dans laquelle une corrélation entre la taille et le nombre de bulles observées et une quantité réelle de liquide restant est apprise pour estimer la quantité restante sur la base des données apprises.

12. Appareil selon la revendication 11, dans lequel le contröleur (50) est configuré pour délivrer en sortie les informations sur la taille et le nombre de bulles, qui sont reçues du dispositif de vision (40), et les résultats d'estimation sur un dispositif d'affichage.

13. Appareil selon la revendication 12, comprenant en outre un éclairage (41) configuré pour émettre de la lumière vers la partie de transmission de lumière (31).

14. Appareil selon la revendication 12, dans lequel la partie de transmission de lumière (31) est disposée dans une section prédéterminée dans le tube d'aspiration (30) et est disposée dans une section s'étendant en ligne droite depuis l'extérieur du récipient de stockage de liquide (10).
